# EUROPEAN PATENT SPECIFICATION

(11) **EP 3 018 737 B1**
(45) Date of publication and mention of the grant of the patent: **05.02.2020**
(21) Application number: 15191267.2
(22) Date of filing: 23.10.2015
(51) Int. Cl.: H01M 4/38, H01M 4/62, H01M 12/06, H01M 4/06, H01M 10/26

(54) **METAL AIR FUEL CELL**
METALL-LUFTBRENNSTOFFZELLE
PILE À COMBUSTIBLE MÉTAL-AIR

(30) Priority: 07.11.2014 KR 20140154320
(43) Date of publication of application: 11.05.2016
(73) Proprietor: Hangzhou MPower New Energy Technology Co., Ltd., Binjiang District Hangzhou City Zhejiang 310051 (CN)
(72) Inventor: Lee, Jong Hwa, 54955 Jeonju-si (KR); Lee, Jong Chan, 55057 Jeonju-si (KR); Park, Jung Tae, Jeonju-si Jeollabuk-do (KR); Jeon, Won, 55056 Jeonju-si (KR)
(74) Representative: 2K Patentanwälte Blasberg Kewitz & Reichel

(56) References cited:
- CN-A- 105 098 200
- US-A- 3 592 693
- US-A1- 2010 040 936
- US-A1- 2014 205 909

## Description

### CROSS-REFERENCE TO RELATED APPLICATIONS

### TECHNICAL FIELD

The following disclosure relates to a metal air fuel cell.

### BACKGROUND

Due to exhaustion of fossil fuel and an influence of global warming, renewable energy has been spotlighted as a future alternative energy source. Therefore, technologies for renewable energy have been globally developed in various fields. In a fuel cell field, which is one of the technologies as described above, fuel cells having various capacities ranging from small capacity to large capacity (several watts to several megawatts) have been studied and developed to thereby be commercialized. However, price competitiveness is still low as compared to other fuel cells such as a secondary battery, and the like.

In general, a metal air fuel cell is composed of an anode, a cathode, and an electrolyte, wherein electrons are released in the anode due to an oxidation reaction between hydroxide ions (OH⁻) contained in the electrolyte and an anode metal, and electrons are accepted in the cathode due to a reduction reaction between oxygen (O₂) and the electrolyte, such that an overall chemical reaction is carried out. Therefore, the anode metal is continuously oxidized, and thus, a metal oxide formed by the oxidation reaction is precipitated in a slurry form or attached to a metal surface or reaches in a saturation state in the electrolyte, such that the electrolyte and the anode should be replaced as consumable articles. Therefore, since it is significantly difficult to replace the electrolyte and the anode as described above, problems such as deterioration of portability, deterioration of stability, and the like, may occur.

In order to overcome these disadvantages, a method of increasing a contact surface area by performing an embossing process on a surface of the metal corresponding to an anode of the metal air fuel cell, forming pores in a metal plate, or the like, to increase an exchange period has been conducted. However, this method generates a negative effect of decreasing a lifetime of the cathode of the metal air fuel cell. In addition, after a metal oxidation reaction, slurry of metal hydroxide or metal oxide is formed to thereby be slowly adsorbed in the cathode. Particularly, in an air fuel cell using magnesium, after an oxidation reaction, as slurry is adsorbed in a cathode stack, viscosity is increased, but it is difficult to wash the cathode stack.

Generally, in the metal air fuel cell, sodium hydroxide (NaOH), potassium hydroxide (KOH), or the like, is used as the electrolyte. Particularly, in a magnesium air fuel cell, sodium chloride (NaCl), or the like, is mainly used, and in aluminum and zinc air fuel cell, an electrolyte such as sodium hydroxide (NaOH), potassium hydroxide (KOH), or the like, which is a strong alkali solution, is used. In this case, at the time of the oxidation reaction, a temperature is significantly increased, and a large amount of hydrogen (H₂) is generated, such that in order to suppress generation of hydrogen, a separate hydrogen generation inhibitor should be added to the electrolyte. Therefore, in the metal air fuel cell using aluminum and zinc metals, the strong alkali solution as described above is used as the electrolyte, portability may be significantly decreased, and a safety problem should also be seriously considered.

### [Related Art Document]

### [Patent Document]

Korean Patent Laid-Open Publication No. 10-2014-0088902

US3592693A discloses a metal anode of a metal air fuel cell. The metal anode comprises a porous metal body or electrode. The porous metal electrode may be fabricated by compressing metal powders or particles to form an anode having a desired shape, or may be fabricated by reducing metal oxides to active metal and thereafter compressing it to a desired thickness and shape, wherein a powdered resinous binder may be used for the shaping. After the metal body is formed, although not completely necessary, it is wrapped in a hydrophilic material, which will help retain the aqueous electrolyte and improve the mechanical integrity and performance of the electrode.

US20142015909A1 discloses a negative electrode mixture or a gel electrolyte and a battery including the same, wherein compounds such as cerium hydroxide, zirconium hydroxide, layered double hydroxides (e.g. hydrotalcite), hydroxyapatite, and ettringite presumably not only suppress a side reaction of decomposing water in charge and discharge or during storage in a charged state in the zinc electrode and self-discharge, and dissolution of the zinc-containing negative electrode active material, but also improve the anion conductivity.

US2010/040936A1 discloses a zinc/air cell, wherein catalytic cathode composite desirably comprises a catalytic cathode mixture of particulate manganese dioxide, carbon, and hydrophobic binder which is applied to a surface of an electrically conductive screen, and the catalytic mixture may typically comprise between about 3 and 10 percent by weight MnO2, 10 and 20 percent by weight carbon, and remainder binder.

### SUMMARY

The invention as defined in claim 1 provides an anode cell of a metal air fuel cell comprising a water permeable body having a pouch shape into which a metal in a powder state and an electrolytic material are injected, and wherein the water permeable body is manufactured to contain any one or two or more selected from a polymer or a water absorption promoter, and wherein the polymer includes at least one of polyethylene, polypropylene and polyethylene terephthalate and wherein the water absorption promoter includes carbon molecular sieve.

Another embodiment of the present invention is directed to providing a metal air fuel cell, which is a metal air fuel cell using an anode cell formed of a water permeable body of which a metal and an electrolytic material are injected into an internal space as an anode, capable of only supplying water (H₂O) to activate the cell and having improved portability.

Another embodiment of the present invention is directed to providing a metal air fuel cell of which usage stability, delivery stability, and storage stability are improved.

Another embodiment of the present invention is directed to providing a metal air fuel cell of which cell efficiency such as voltage, current, power, and the like, price competitiveness, and durability/stability characteristics such as a cell lifetime, and the like, are improved.

In one general aspect, a metal air fuel cell uses an anode cell formed of a water permeable body of which a metal and an electrolytic material are injected into an internal space as an anode.

In another general aspect, a metal air fuel cell includes a unit cell including the anode cell as described above and a cathode.

### BRIEF DESCRIPTION OF THE DRAWINGS

FIG. 1 is a photograph illustrating an anode cell of a metal air fuel cell according to Example 2.
FIG. 2 is a photograph illustrating the anode cell of the metal air fuel cell according to Example 2, assembled with an electrode terminal module.
FIG. 3 is an assembled perspective view of a single cell metal air fuel cell according to an exemplary embodiment of the present invention.
FIG. 4 is a photograph illustrating a cathode of a metal air fuel cell according to Example 1.
FIG. 5 is a graph illustrating data on voltage, current, and power of a metal air fuel cell manufactured by applying an anode cell using aluminum and magnesium mixed powder according to Example 1.
FIG. 6 is a graph illustrating data on voltage, current, and power of a metal air fuel cell manufactured by applying an anode cell using aluminum and magnesium mixed powder and cerium hydroxide according to Example 2.
FIG. 7 is a graph illustrating data on voltage, current, and power of a metal air fuel cell manufactured by applying an anode using an aluminum/magnesium alloy plate according to Comparative Example 1.

### [Detailed Description of Main Elements]

101: Metal air fuel cell
102: Cathode
103: Anode cell
111: Plate protecting cathode
112: Anode electrode
113: Cathode electrode

### DETAILED DESCRIPTION OF EMBODIMENTS

Hereinafter, a metal air fuel cell according to present invention will be described in detail with reference to the accompanying drawings. The following accompanying drawings are provided by way of example so that the idea of the present invention can be sufficiently transferred to those skilled in the art to which the present invention pertains. Therefore, the present invention is not limited to the drawings to be provided below, but may be modified in many different forms. In addition, the drawings to be provided below may be exaggerated in order to clarify the scope of the present invention. Here, technical terms and scientific terms used in the present specification have the general meaning understood by those skilled in the art to which the present invention pertains unless otherwise defined, and a description for the known function and configuration unnecessarily obscuring the gist of the present invention will be omitted in the following description and the accompanying drawings. In addition, unless particularly described, "%" used herein refers to "wt%".

Further, as used herein, the term "water" refers to H₂O itself, the kind of water is not limited as long as it may convert an electrolytic material injected into an anode cell into an electrolyte. Furthermore, "water" is mixed with an electrolytic material in a water permeable body of a metal air fuel cell according to the present invention to form the electrolyte. In this case, the term "water" may refer to the electrolyte containing electrolytic ions from the electrolytic material.

In addition, as used therein, the term "water-electrolyte conversion structure" means that the electrolytic material injected into the anode cell is mixed with water to form the electrolyte.

Further, as used herein, the term "activation" refers to a state in which minimal conditions for operating the cell are provided and a state in which it is possible to operate and stop the cell, but the term "activation" may restrictively refer to an operation. In addition, the term "inactivation" refers to a state for long-term storage in which an operation is impossible.

Further, as used herein, the term "electrolytic material" refers to an electrolytic material in all of the states such as a solid state, a liquid state, and the like.

The present invention, which is to improve portability, stability, and price efficiency that are problems of a metal air fuel cell according to the related art, relates to an anode cell using a water permeable body into which a metal and an electrolytic material are injected and a metal air fuel cell manufactured using the anode cell.

In detail, the metal air fuel cell according to the present invention includes the anode cell formed of the water permeable body into which the electrolytic material containing an electrolytic material salt, instead of directly using an electrolyte. Therefore, since the anode cell containing the electrolytic material instead of the electrolyte is used in the metal air fuel cell according to the present invention, there is no need to provide the electrolyte itself, and the metal air fuel cell is activated by supplying only water rather than the electrolyte. Therefore, stability is excellent, deterioration of cell efficiency may be prevented only by removing water at the time of inactivation, and the metal air fuel cell may be stably stored for a long period of time.

According to the related art, in order to improve cell efficiency and lifetime, an electrolyte containing a large amount of an electrolytic material is directly provided in the metal air fuel cell to thereby be used, but in the metal air fuel cell including the anode cell according to the present invention, the electrolytic material in the anode cell is maintained in a state in which the electrolytic material may continuously react with water to maximally exhibit cell efficiency. Therefore, there is almost no difference in cell efficiency as compared to the cell according to the related art, using the electrolyte itself, but it is easy to exchange water, the anode cell, and the like, such that stability such as usage stability, storage stability, and the like, as well as portability may be excellent. That is, in the metal air fuel cell according to the related art, at the time of activation, there is a need to supply the electrolyte itself, but in the metal air fuel cell according to the present invention, the metal air fuel cell may be activated and operated only by supplying water that does not contain the electrolytic material at all, and at the time of inactivation, the metal air fuel cell may be stored for a long period of time by removing water.

Further, in the case of activating the metal air fuel cell according to the present invention, as the electrolyte may be formed within several seconds (about 3 to 5 seconds) only by supplying water to the anode cell, a chemical reaction is carried out, such that normal cell performance may be exhibited.

Therefore, in the metal air fuel cell according to the present invention, it is possible to improve stability and portability, which are problems of the metal air fuel cell according to the related art, used in a state in which the electrolyte is always injected. Particularly, in the case in which the anode cell needs to be exchanged, since the electrolytic material is injected into an anode unit cell, the metal air fuel cell may be activated only by supplying water after removing water and exchanging the anode cell, such that a problem that a large amount of electrolyte should be exchanged together with the anode cell or the electrolyte should be supplied again does not occur.

That is, in the case of inactivating the metal air fuel cell according to the present invention, the inactivation is performed only by removing water. In the case of activating the metal air fuel cell, when water is supplied, as the electrolytic material in the anode cell is mixed with water to form the electrolyte, the metal air fuel cell may be normally operated. Therefore, usage stability, delivery stability, and storage stability in addition to portability may be significantly improved.

Further, the anode cell may be simply and easily carried and exchanged, such that the metal air fuel cell may be activated in any place as long as water is supplied thereto.

In addition, since the chemical reaction is carried out by the electrolyte formed from the electrolytic material at the time of activation instead of using electrolyte itself, a phenomenon that slurry of metal hydroxide, metal oxide, or the like, generated in the anode cell after an oxidation reaction is discharged to the outside of the anode cell may be significantly decreased, such that a problem that a lifetime of a cathode is deteriorated may be significantly decreased.

Further, since the anode cell has high energy density, weight efficiency for the performance is high, such that cell efficiency is high.

Hereinafter, the present invention will be described in detail.

The present invention relates to the anode cell formed of the water permeable body into which the metal and the electrolytic materials are injected. In addition, the present invention relates to the metal air fuel cell including the anode cell.

According to an exemplary embodiment of the present invention, the water permeable body contains the electrolytic material injected thereinto, and the principle and characteristics thereof are differentfrom an anode according to the related art, such that the water permeable body may have excellent portability due to advantages in view of handling such as storage, delivery, or the like.

As the water permeable body of the present invention, a water permeable body having a structure capable of passing water into the water permeable body from the outside may be used without limitation. For example, it is preferable to use a water permeable body capable of easily absorbing water so that water may easily pass into the water permeable body.

More specifically, in the metal air fuel cell using the anode cell formed of the water permeable body, at the time of activation, water is simply supplied into the anode cell, such that the electrolytic material in the anode cell is mixed with the water to form the electrolyte, and thus, a chemical reaction between the anode cell, the cathode, and the electrolyte is carried out, thereby making it possible to normally operate the cell. In addition, at the time of inactivation, since a state in which the electrolytic material is injected into the anode cell is maintained by removing water, the metal air fuel cell is advantageous in view of handling such as storage, delivery, or the like.

According to the exemplary embodiment of the present invention, the water permeable body may contain the metal and the electrolytic material therein. As a specific and non-restrictive example, the water permeable body may be manufactured by injecting a metal generating electrons by oxidation such as a metal, metal powder, metal mixed powder, or the like, into the water permeable body and then sealing the water permeable body. However, the above-mentioned water permeable body is only a preferable example, but the present invention is not limited thereto.

According to an exemplary embodiment of the present invention, the water permeable body may have a structure in which a metal of other electrodes, an electric wire, a terminal, or the like, is formed to pass through internal and external portions of the water permeable body, but is not limited thereto.

According to an exemplary embodiment of the present invention, a water permeable body having a structure capable of injecting the metal and the electrolytic material may be used without limitation. For example, the water permeable body may have a pouch shape. As a specific and non-restrictive example, the water permeable body has a tetragonal pouch shape, which is more advantageous in view of handling such as storage, delivery, or the like, but this is only a preferable example. That is, the water permeable body may have various shapes as long as materials are injected thereinto.

According to an exemplary embodiment of the present invention, a size of the water permeable body is not limited, and the water permeable body may have various sizes so as to be suitable for a metal air fuel cell having a small size, a middle size, or a large size. Since the size of the water permeable body may be adjusted depending on cell capacity or desired purpose, the size is not limited.

According to the exemplary embodiment of the present invention, the water permeable body may have a porous structure. For example, the water permeable body may have a porous structure in which pores having a pore size of 0.01 to 100 *µ*m, preferably 0.05 to 50 *µ*m are formed.
Further, the water permeable body having this porous structure may have air permeability of 1 to 300cm²/cm³/sec, preferably 5 to 150cm²/cm³/sec. In the case in which the water permeable body satisfies the above-mentioned air permeability, water absorption capability may be further improved, such that a more rapid reaction may be induced, and a control reaction rate depending on supply/removal of water may be improved. However, this is only a preferable example, but the present invention is not limited thereto.

The water permeable body is manufactured to contain any one or two or more selected from a polymer or a water absorption promoter. In the case in which the water permeable body is manufactured to contain the polymer, the water absorption promoter, or the like, water absorption capability may be further improved, such that at the time of activation, a reaction rate may be further improved.

The polymer may include any one or two or more selected from copolymers including any one or two or more selected from cellulose, chitin, chitosan, alginate, or a derivative thereof, polysulfone (PSU), polyetherimide (PEI), polyvinylalcohol (PVA), polyimide (PI), polyvinylidenefluoride (PVDF), polyacrylonitrile (PAN), polyethyleneoxide (PEO), polyethylene (PE), polypropylene (PP), polyethylene terephthalate (PET), a derivative thereof, a mixture thereof, or the like. Since the electrolytic material injected into the cell is mixed with water to form the electrolyte when water is supplied to the anode cell using the water permeable body made of the polymer, an oxidation reaction is carried out in the cell, and a reduction reaction with oxygen is carried out in the cathode, such that the metal air fuel cell is activated.

According to an exemplary embodiment of the present invention, an average molecular weight (Mw) of the polymer may be selected in a wide range, for example, 20,000 to 3,000,000 g/mol, preferably 50,000 to 1,500,000 g/mol. However, the average molecular weight is not limited as long as the structure of the water permeable body may be maintained.

According to an exemplary embodiment of the present invention, the water permeable body may contain 30 to 300 parts by weight of polyethylene, 30 to 300 parts by weight of polypropylene, and 0.01 to 50 parts by weight of a carbon molecular sieve based on 100 parts by weight of polyethylene terephthalate.

According to a first option of the present invention, the water permeable body further contains the water absorption promoter. As a specific and non-restrictive example, the water permeable body may contain 0.001 to 20 wt%, preferably 0.01 to 10 wt% of the water absorption promoter based on a total weight of the water permeable body. Although the water permeable body itself has excellent water absorption capability, the water permeable body is manufactured to further contain the water absorption promoter, such that water absorption capability may be maximized, such that the reaction rate at the time of operation may be further increased.

According to a first option of the present invention, the water absorption promoter is manufactured to contain a carbon molecular sieve (CMS). Since the carbon molecular sieve has significantly high water absorption capability, in the case in which the water permeable body is manufactured to further contain the carbon molecular sieve, the reaction rate at the time of activation may be further increased.

As described above, since to improve water absorption capability of the water permeable body is to increase the reaction rate at the time of activation, the water absorption capability of the water permeable body may be generally used as an important parameter unlike the metal air fuel cell according to the related art in which the electrolyte is always directly provided. More specifically, in the case of the metal air fuel cell according to the related art in which the electrolyte is always provided, since the electrolyte is already provided, an operation reaction rate may be rapid, but in the metal air fuel cell according to the present invention, since the electrolyte is not directly used as in the related art, but is formed by supply of water to thereby be activated, water absorption capability of the water permeable body may be an important parameter.

Therefore, the metal air fuel cell according to the present invention uses the water absorption promoter, thereby making it possible to maintain a reaction rate to be almost equal to that of the metal air fuel cell according to the related art in which the electrolyte is always provided.

According to an exemplary embodiment of the present invention, a content of the electrolytic material may be 1 to 1000 parts by weight, preferably 10 to 500 parts by weight, and more particularly, 15 to 200 parts by weight based on 100 parts by weight of the metal. However, the content as described above is only a preferable example for improving cell efficiency, but the present invention is not limited thereto.

According to an exemplary embodiment of the present invention, the metal may include any one or two or more selected from lithium (Li), sodium (Na), potassium (K), calcium (Ca), magnesium (Mg), aluminum (Al), zinc (Zn), an alloy thereof, or mixed powder thereof. As a specific and non-restrictive example, aluminum, magnesium, or the like, may be preferable in view of price efficiency and energy density. Although a lithium metal has the highest theoretical energy density value as compared to other metals, the lithium metal is relatively expensive as compared to other metals and is exploded when the lithium metal comes in contact with water at the time of handling, such that a manufacturing process needs to be performed in a perfect dry room. Therefore, in spite of high energy density of the lithium metal, it is preferable to use an aluminum or magnesium metal or a mixed metal thereof in the metal air fuel cell using the anode cell according to the present invention. However, any metal may be used as long as an oxidation/reduction reaction is carried out to form a current.

According to an exemplary embodiment of the present invention, the metal may be a metal itself and be preferably in a powder or mixed powder state. The metal is in the powder state as described above, which is preferable in view of further improving cell efficiency. As a specific and non-restrictive example, an average particle size of the powder is not limited as long as the powder does not leak from the water permeable body to the outside, but for example, the average particle size may be 25 to 300 *µ*m, preferably 50 to 200 *µ*m. However, this only a preferable example, but the present invention is not limited thereto.

According to an exemplary embodiment of the present invention, the electrolytic material may be in a solid state. At the time of activation, a solid-state electrolytic material is mixed with water to form a liquid state electrolyte, such that the metal air fuel cell may be normally operated, and at the time of inactivation, long-' term storage characteristics and portability may be improved by removing the electrolyte. In addition, the metal air fuel cell may be activated by supplying water rather than the electrolyte, such that there is no need to provide a separate electrolyte.

According to an exemplary embodiment of the present invention, the electrolytic material may contain any one or two or more selected from potassium hydroxide (KOH), sodium chloride (NaCl), potassium chloride (KCl), sodium hydroxide (NaOH), calcium oxide (CaO), calcium carbonate (CaCO₃), sodium carbonate (NaCO₃), calcium hydroxide (Ca(OH)₂) barium hydroxide (Ba(OH)₂), citric acid, or the like. In view of characteristics of the anode cell derived from the solid-state electrolytic material as described above, it is preferable that electrolytic material is a material having low deliquescence or no deliquescence. In general, as an electrolytic material of a magnesium metal air fuel cell, sodium chloride, potassium chloride, or the like, is used, and as an electrolytic material of an aluminum and zinc metal air fuel cell, potassium hydroxide, or the like, is used. However, due to characteristics of the present invention, deliquescence corresponding to a property of sodium hydroxide is inefficient in being used in the anode cell including the water permeable body into which the solid-state electrolytic material is injected, such that it is more preferable to use potassium hydroxide, or the like, that does not have deliquescence. However, this is only a preferable example, but the present invention is not limited thereto.

According to an exemplary embodiment of the present invention, the electrolytic material may further contain cerium hydroxide (Ce(OH)₃). As a specific and non-restrictive example, the electrolytic material may further contain 0.001 to 10 parts by weight of cerium hydroxide based on 100 parts by weight of the metal. In the case in which the electrolytic material further contains cerium hydroxide, cell efficiency such as power, or the like, may be further improved. As a specific and non-restrictive example, an average particle size of cerium hydroxide may be 50 to 300 *µ*m, preferably 100 to 200 *µ*m, but this is only a preferable example, and the present invention is not limited thereto.

According to an exemplary embodiment of the present invention, the electrolytic material may further contain a hydrogen generation inhibitor. As a specific and non-restrictive example, the electrolytic material may further contain 0.001 to 10 parts by weight of the hydrogen generation inhibitor based on 100 parts by weight of the metal. Further, it is preferable that potassium sulfide (K₂S), or the like, is used as the hydrogen generation inhibitor, but the present invention is not limited thereto. That is, another ingredient may be used as long as it may inhibit generation of hydrogen. For example, generation of a large amount of hydrogen (H₂) at internal and external portions of the anode cell together in addition to a temperature increase may be prevented in the case in which the reaction is carried out by supplying water.

Hereinafter, a metal air fuel cell manufactured to include the anode cell according to the present invention will be described.

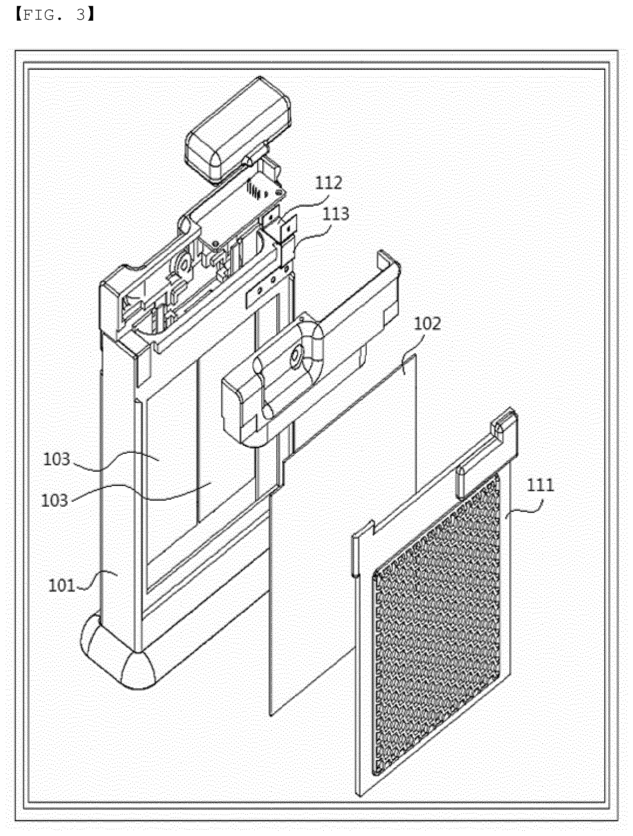

As illustrated in FIG. 3, in another aspect of the present invention, a metal air fuel cell 101 according to the present invention may include an anode cell and a cathode. As a specific and non-restrictive example, the cell may include an anode cell 103, a cathode 102, a plate protecting cathode 111 formed on one surface of the cathode, an anode electrode 112, and a cathode electrode 113.

According to the exemplary embodiment of the present invention, although not illustrated, a space in which air (O₂) may be freely introduced from and discharged to the outside and water may be stored may be formed in the metal air fuel cell. In addition, the metal air fuel cell may be formed by disposing the cathode and the anode cell therein, and the anode cell and the cathode may be alternately and repeatedly disposed. A disposition structure of the cathode and the anode cell as described above is generally and widely known in a metal air fuel cell field, the present invention is not limited thereto.

As described above, although not illustrated, the space in which water may be stored is formed in the metal air fuel cell, wherein the space has a structure in which air may be freely introduced from the outside.

In general, unlike the cathode capable of be used for a long period of time, since oxidation (the loss of electrons) occurs in the anode cell, MgO (in the case of a magnesium metal), Al₂O₃ (in the case of an aluminum metal), or the like, may be precipitated or adsorbed in a surface of an anode to thereby form a passive film, which may deteriorate performance. As a result, MgO, Al₂O₃, or the like, is saturated in the electrolyte, such that the lifetime of the anode cell is ended. Therefore, the anode cell should be exchanged in a form of physical charge, and the electrolyte should also be exchanged. However, although the metal air fuel cell according to the present invention is formed by assembling the anode cell and the cathode, cell efficiency is not deteriorated as compared to an integration-type metal air fuel cell, and the anode cell may be easily detached/attached. Therefore, the above-mentioned problems may be significantly decreased.

Further, exchange of the electrolyte may be replaced by simply supplying water instead of exchanging the electrolyte, such that portability is significantly excellent. More specifically, in the case of the metal air fuel cell according to the related art, there is a problem that a large amount of electrolyte should be exchanged. However, in the case of the anode cell formed of the water permeable body according to the present invention, since the metal air fuel cell may be activated by supplying water instead of exchanging the electrolyte itself, the metal air fuel cell may be inactivated and stored for a long period of time by simply separating a solid-state anode cell or removing water including an electrolytic ingredient.

According to an exemplary embodiment of the present invention, the metal air fuel cell may further include a water outlet formed at a lower end of the metal air fuel cell and a water inlet being in communication with the space in which the cathode 102 and the anode cell 103 are provided and formed at an upper end of the metal air fuel cell.

According to an exemplary embodiment of the present invention, the water inlet is in communication with the space in which the anode cell and the cathode are provided, and water may be introduced and discharged therethrough. In addition, at the time of inactivation, water may be easily removed through the water outlet formed at the lower end. It is more preferable that the water inlet is in communication with the cathode and an upper portion of the anode cell, and the water inlet may have any structure as long as water may be smoothly supplied to and removed from the anode cell formed of the water permeable body.

In another aspect of the present invention, the metal air fuel cell according to the present invention may include a plurality of unit cells each composed of an anode cell and a cathode as a single unit.

According to an exemplary embodiment of the present invention, in the case of the metal air fuel cell including the plurality of unit cells, a water supply part has a structure in which water may be injected into each of -the unit cells at a constant supply rate, which is preferable in view of stable cell efficiency. In detail, only when the metal air fuel cell has a structure in which each of the unit cells may be simultaneously operated, an initial reaction rate for each of the unit cells and voltage, current, and power in each of the unit cells may be constantly operated and maintained, thereby making it possible to improve cell efficiency.

As described above, the metal air fuel cell according to the present invention may include the plurality of unit cells each composed of the anode cell and the cathode as the single unit. As a specific and non-restrictive example, one surface of the anode cell and one surface of the cathode may be disposed to face each other in the unit cell, and these unit cells may be disposed and repeated in various structures. Since this structure is widely known in the art, the present invention is not limited thereto.

According to an exemplary embodiment of the present invention, the metal air fuel cell according to the present invention may be manufactured to include a water outlet formed at a lower end of the metal air fuel cell, a water inlet formed at an upper end of the metal air fuel cell and being in communication with an internal portion thereof, a water supply part being in communication with the water inlet, a case enclosing the metal air fuel cell, a water discharge part being in communication with the water outlet to protrude outwardly from the case, a cathode cap assembled with an upper portion thereof, and a case top assembled with an upper portion of the cathode cap.

According to the exemplary embodiment of the present invention, the metal air fuel cell may further include any one or two or more selected from components such as a water cork, the cathode cap, the case top, a water cap, and the like. These components may be changed or some of them may be excluded, and since those skilled in the art may easily apply these components, the present invention is not limited thereto. Further, even though the metal air fuel cell including the anode cell according to the present invention includes other components except for the above-mentioned components, the metal air fuel cell also pertains to the spirit of the present invention.

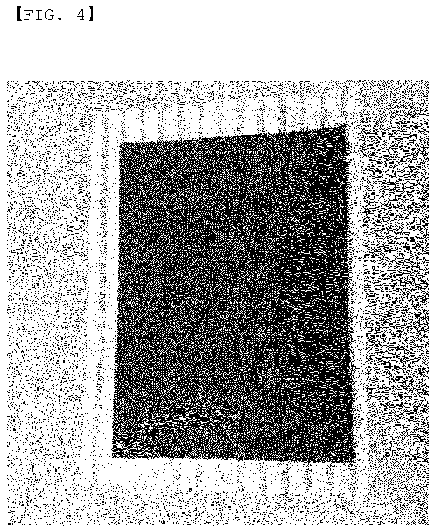

According to an exemplary embodiment of the present invention, the cathode may be manufactured to contain any one or two or more selected from a carbon material, a metal catalyst, or a conductor. This is illustrated in FIG. 4, and the carbon material, the metal catalyst, and the conductor may be used as an active material.

According to an exemplary embodiment of the present invention, the cathode may include a cathode current collector on which a cathode coating solution containing the carbon material, the metal catalyst, the conductor, and a binder is applied.

According to an exemplary embodiment of the present invention, the current collector may include any one or two or more selected from sheets, or the like, (a thin film or plain woven metal cloth) containing aluminum, nickel, copper, titanium, iron, stainless steel, graphite, or a mixture thereof, but is not limited thereto.

According to an exemplary embodiment of the present invention, the cathode coating solution may contain 100 to 800 parts by weight of the metal catalyst, 10 to 200 parts by weight of the conductor, and 1 to 300 parts by weight of the binder based on 100 parts by weight of the carbon material. Preferably, the cathode coating solution may contain 200 to 700 parts by weight of themetal catalyst, 20 to 150 parts by weight of the conductor, and 5 to 100 parts by weight of the binder based on 100 parts by weight of the carbon material, but is not limited thereto.

According to an exemplary embodiment of the present invention, as a method of applying the cathode coating solution on the current collector, there are a spray method, a dip coating method, a knife casting method, a doctor blade method, a spin coating method, and the like, but the present invention is not limited thereto. That is, all coating methods may be used. As a specific and non-restrictive example, when a coating thickness is 10 to 500 *µ*m, preferably 20 to 300 *µ*m, electric resistance of an electrode may be decreased, and cell efficiency may be improved. In addition, the electrode having a desired thickness may be manufactured by repeating the above-mentioned method several times or more.

According to an exemplary embodiment of the present invention, the carbon material may contain any one or two or more selected from activated carbon, carbon black, graphite, carbon nanotube, acetylene black, Ketjen black, XCF carbon, SFR carbon, or the like. A content ratio of the used carbon material may be adjusted depending on required physical properties. As a specific and non-restrictive example, an average particle size of the carbon material may be 1 *µ*m or less, preferably 10nm to 1 *µ*m, which is preferable in view of increasing electric conductivity. However, this is only a preferable example, but the present invention is not limited thereto.

According to an exemplary embodiment of the present invention, the metal catalyst may include any one or two or more selected from copper, nickel, cobalt, iron, platinum, gold, silver, aluminum, ruthenium, chromium, magnesium, manganese, molybdenum, rhodium, tantalum, titanium, tungsten, uranium, vanadium, palladium, yttrium, zirconium, germanium, iridium, or an alloy thereof. Any catalyst may be used as well as the above-mentioned catalysts as long as it assists in activity. As a specific and non-restrictive example, considering performance efficiency for the price, cobalt, nickel, and the like, may be preferable. In the case of using a rare metal or noble metal such as platinum, or the like, as the catalyst, the metal air fuel cell may have significantly high efficiency, but the metal such as cobalt, nickel, and the like, has high price competitiveness, such that these metals may be widely applied in the industry.

According to an exemplary embodiment of the present invention, the conductor may contain any one or two or more selected from transition metals including Ag, Au, Cu, Ni, Co, Pd, Pt, Ti, V, Mn, Fe, Cr, Zr, Nb, Mo, W, Ru, Cd, Ta, Re, Os, Ir, or the like, metals including Al, Ga, Ge, In, Sn, Sb, Pb, Bi, or the like, lanthanides metals, actinides metals, an alloy thereof, an alloy oxide thereof, or the like. The conductor is not particularly limited, and any conductor known in the art may be used as long as it coincides with the object of the present invention. In addition, the kinds, sizes, shapes, and the like, of conductor or metal precursor are not limited.

According to an exemplary embodiment of the present invention, the conductor may further contain a conductive polymer containing any one or two or more materials selected from conductive carbon black, graphite, carbon nanotube, polyacetylene, polypyrrole, polyaniline, polythiophene, a derivative thereof, and the like. In addition, activated carbon powder, activated carbon fiber, carbon nanotube, carbon aerosol, and the like, may be used. However, the present invention is not limited thereto, but other conductive polymers may be used without particular limitation. As a specific and non-restrictive example, any active material containing the conductive polymer may be used as long as it is an activated carbon based material having high specific surface area, and it is preferable that the active material is prepared in a form of powder and then used. Further, a content range of the active material may be adjusted depending on the required physical properties, the active material having an average particle size of 10 *µ*m or less, more specifically 10nm to 10 *µ*m is used, which is preferable in view of increasing a specific surface area of the electrode and charging capacity.

According to an exemplary embodiment of the present invention, the cathode active material may contain 30 to 70 parts by weight of nickel (Ni) and 10 to 40 parts by weight of manganese (Mn) based on 100 parts by weight of cobalt (Co). As a specific and non-restrictive example, a weight ratio of cobalt, nickel, and manganese is 5:3:3, 5:2:3, 6:2:4, or the like, which is more preferable in view of an oxidation reduction reaction (ORR), and the conductor is added thereto at a weight rate of 3 to 5%, which is more stable.

According to an exemplary embodiment of the present invention, the binder is an organic polymer chemically inert for a chemical material coming in contact with an electrochemical cell and is used for mechanical stabilization of the cathode active material. The reason is that active materials such as the carbon material, or the like, are bound to each other by the binder. Further, the binder may allow the cathode active material to have sufficient adhesive force to an output conductor.

According to an exemplary embodiment of the present invention, the kind of binder may be selected from organic polymers (or copolymers). For example, the binder may include any one or two or more selected from polyethylene oxide (PEO), cellulose, carboxymethylcellulose, polyvinyl alcohol, polyethylene, polypropylene, polytetrafluoroethylene, a polyacrylonitrile-methyl methacrylate copolymer, a styrene-butadiene copolymer, a tetrafluoroethylene-hexafluoropropylene copolymer, a vinylidene fluoride-hexafluoropropylene copolymer(PVdF-HFP), a vinylidene fluoride-tetrafluoroethylene copolymer, a perfluoroalkyl vinyl ether copolymer, an ethylene-tetrafluoroethylene copolymer, a vinylidene fluoride-chlorotrifluoroethylene copolymer, an ethylene-chlorofluoroethylene copolymer, an ethylene-acrylic acid copolymer (selectively and at least partially neutralized by an alkali metal salt or ammonia), an ethylene-methacrylic acid copolymer, an ethylene-(meth)acrylic ester copolymer, polyimide, polyvinylidenefluoride (PVDF), polytetrafluoroethylene (PTFE), polyvinylidenechloride (PVDC), polyvinylchloride (PVC), styrenebutadiene rubber (SBR), polyisobutene, or the like. However, this is only a preferable example, but the present invention is not limited thereto.

According to an exemplary embodiment of the present invention, an average molecular weight (Mw) of the binder may be selected in a wide range, preferably, for example, 20,000 g/mol to 1,000,000 g/mol, but is not limited thereto.

According to an exemplary embodiment of the present invention, the binder may be mixed with the cathode or the cathode active material by various methods. For example, a soluble binder such as polyvinyl alcohol may be dissolved in a suitable solvent or solvent mixture, for example, water/isopropanol, and a suspension with additional ingredients of the cathode active material may be prepared. The cathode containing the active material may be obtained by applying the suspension on a suitable substrate and then removing (for example, evaporating) the solvent or solvent mixture. A solvent suitable for polyvinylidene fluoride is NMP.

Hereinafter, the present invention will be described in more detail through Examples and Comparative Examples, but they are provided only for clearly describing of the present invention, and the scope of the present invention is not limited thereby.

### [Example 1]

In order to manufacture a cathode, activated carbon, a cobalt metal catalyst, nickel, and a polytetrafluoroethylene (60% dispersion solution) binder were mixed at a weight mixing ratio of 10:60:10:20 at room temperature for 30 minutes, thereby preparing a cathode coating solution. Then, the cathode was manufactured by dip-coating the prepared coating solution on nickel foam (130 ppi, thickness: 2mm, surface density: 420g/m²).

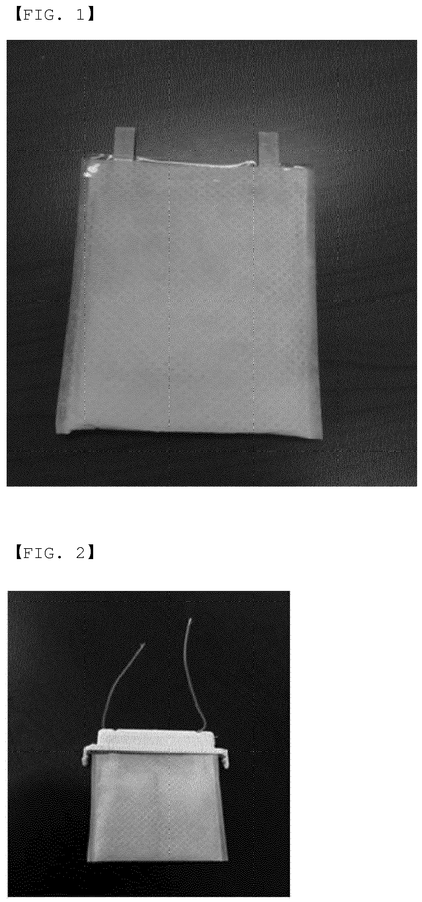

In order to manufacture an anode cell, 100 parts by weight of polyethylene, 143 parts by weight of polypropylene, and 14 parts by weight of a carbon molecular sieve (CMS), (FM20, Korea CMC) were melted, kneaded, and spun, based on 100 parts by weight of polyethylene terephthalate, thereby manufacturing a water permeable body (width: 85mm, length: 100mm), which is a non-woven fabric having a pouch shape. Physical properties of the non-woven fabric were as follows: a weight was 90g/m² ±9g, a thickness was 0.45mm ± 0.05mm, tensile strength (kg/3cm) in a machine direction (MD) was 6.6kg or more, tensile strength in a cross direction (CD) was 9.4kg or more, tensile elongation in the MD was 60.0% or more, tensile elongation in the CD was 52.0% or more, and air permeability was 30 ± 0.3(cm²/cm³/sec). Aluminum/magnesium mixed powder (aluminum powder: 20g, magnesium powder: 80g) having an average particle size of about 125 *µ*m ,solid powder-state potassium hydroxide (25g), potassium chloride (30g), calcium oxide (2g), and calcium sulfide (1g) were injected into the water permeable body, and then, the water permeable body was finally subjected to a sealing process together with an electrode (anode electrode). Next, each component was assembled as illustrated in FIG. 2, thereby manufacturing the anode cell.

A single-cell metal air fuel cell was manufactured using the cathode and the anode cell as illustrated in FIG. 3.

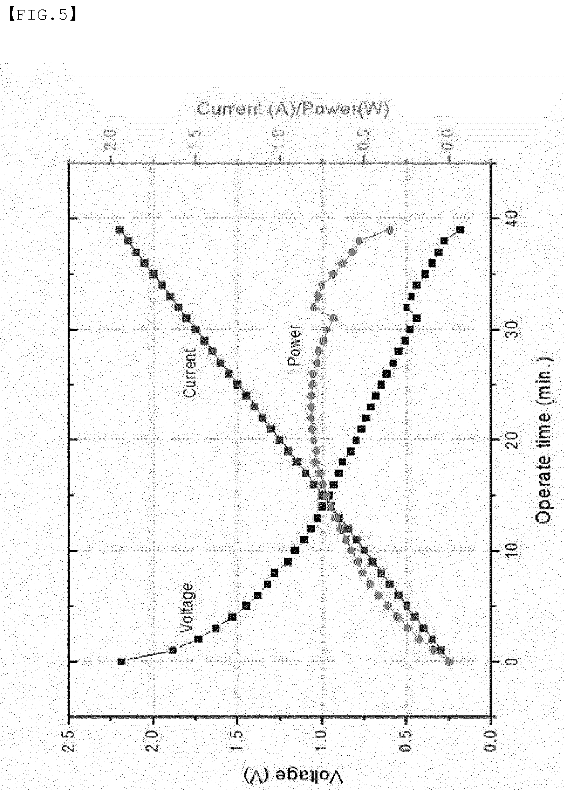

Next, after injecting water, the metal air fuel cell was operated, and voltage, current, and power were measured. As illustrated in FIG. 5, the metal air fuel cell had maximum power of 0.817W.

### [Example 2]

A single-cell metal air fuel cell was manufactured in the same manner as in Example 1 except for further injecting 0.5g of cerium hydroxide powder having an average particle size of 150 *µ*m into the water permeable body manufactured in Example 1.

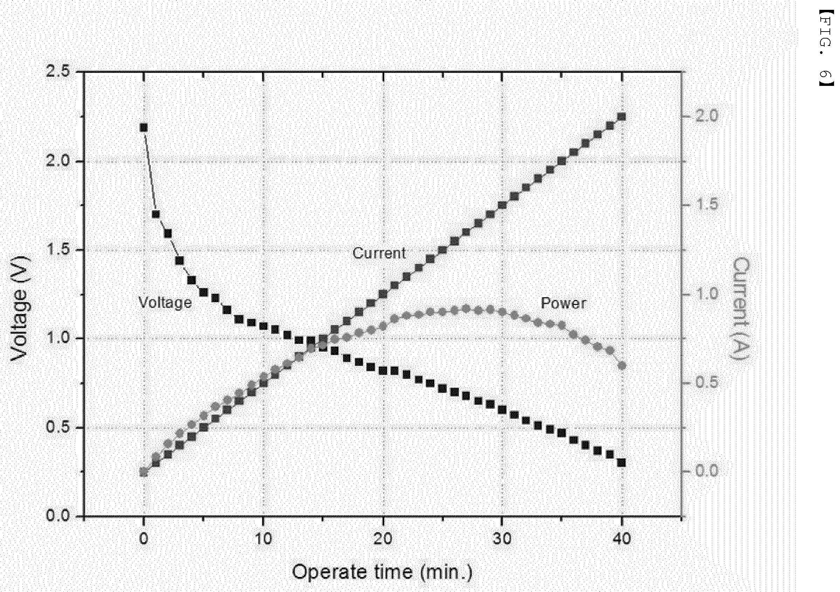

Next, after injecting water, the metal air fuel cell was operated, and voltage, current, and power were measured. As illustrated in FIG. 6, the metal air fuel cell had maximum power of 0.918W.

### (Comparative Example 1)

A single-cell metal air fuel cell was manufactured in the same manner as in Example 1 except for using an aluminum/magnesium alloy plate instead of the anode cell manufactured in Example 1 as an anode and using a potassium chloride (KCl) electrolyte instead of water.

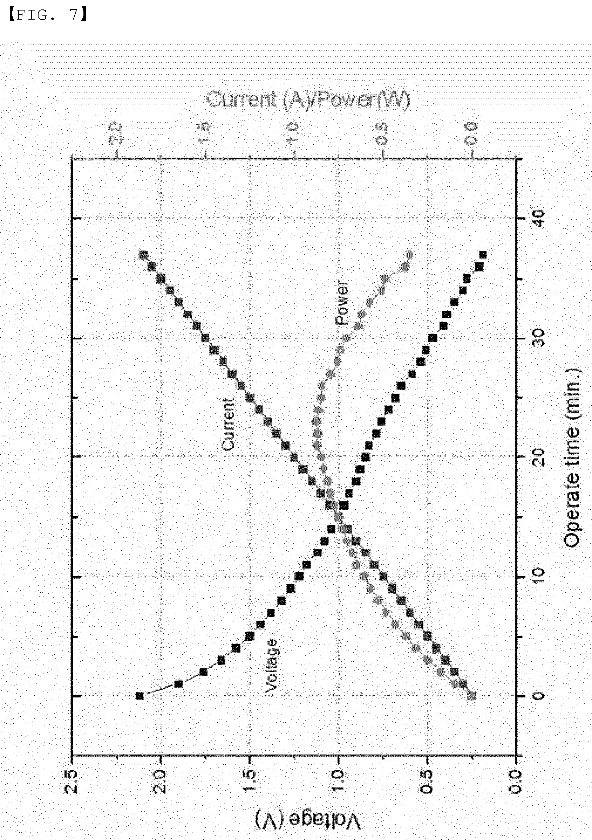

Next, after injecting water, the metal air fuel cell was operated, and voltage, current, and power were measured. As illustrated in FIG. 7, the metal air fuel cell had maximum power of 0.874W.

It may be appreciated that cell efficiency such as voltage, current, power, and the like, of the metal air fuel cell using the anode cell according to Example 2 in which cerium hydroxide was further used as compared to the anode cell according to Example 1 was more excellent.

Further, the maximum power of the metal air fuel cell using the anode cell according to Example 2 was 0.918W, which was higher by 0.044W than that of the metal air fuel cell according to Comparative Example 1. The reason may be that cerium hydroxide was additionally used in the metal mixed powder. Therefore, it may be confirmed that the metal air fuel cell has excellent cell efficiency as compared to a general metal air fuel cell according to the related art in which the electrolyte is directly used.

As described above, the metal air fuel cell according to the present invention may effective solve portability, storage, and stability problems, which are problems of the metal air fuel cell according to the related art, and this effect is due to the anode cell formed of the water permeable body. That is, this effect is due to a water-electrolyte conversion structure in which the electrolytic material injected into the water permeable body is mixed with water to form the electrolyte at the time of activation by using water that may be easily handled and have excellent stability instead of a fixed idea of the metal air fuel cell according to the related art to be directly supplied with the electrolyte to thereby be used. This water-electrolyte conversion structure using water is implemented by a coupling relationship between the anode cell composed of only the solid-state material and water.

Therefore, the principle of the metal air fuel cell according to the present invention is different from the principle of the fuel cell according to the related art operated in a state in which a predetermined concentration of electrolyte is provided. The metal air fuel cell according to the present invention is operated depending on the principle of the water-electrolyte conversion structure capable of activating and inactivating the metal air fuel cell only by supply and removal of water, such that the fuel cell may be conveniently and safely used.

Further, this water-electrolyte conversion structure may be applied to a large size as well as a small size, such that the water-electrolyte conversion structure may be widely commercialized in various fields or purposes, which is significantly advantageous in view of commercialization.

In the metal air fuel cell according to the present invention, the anode cell formed of the water permeable body of which the metal and the electrolytic material are injected into the internal space is used as the anode, such that the metal air fuel cell may have excellent portability.

In the metal air fuel cell according to the present invention, the anode cell is applied to the anode, such that usage stability, delivery stability, and storage stability may be improved.

In the metal air fuel cell according to the present invention, the anode cell is used as the anode, such that cell efficiency such as voltage, current, power, and the like, price competitiveness, and durability/stability characteristics such as a cell lifetime, and the like, are improved.

## Claims

1. An anode cell of a metal air fuel cell (101), the anode cell (103) comprising a water permeable body having a pouch shape into which a metal in a powder state and an electrolytic material are injected;
wherein the water permeable body is manufactured to contain any one or two or more selected from a polymer or a water absorption promoter;
the polymer includes at least one of polyethylene, polypropylene and polyethylene terephthalate; and
the water absorption promoter includes carbon molecular sieve.

2. The anode cell of claim 1, wherein the electrolytic material is in a solid state, and an electrolyte is formed in the water permeable body by supply of water, such that the metal air fuel cell (101) is activated.

3. The anode cell of claim 1, wherein the metal includes any one or two or more selected from lithium, sodium, potassium, calcium, magnesium, aluminum, zinc, an alloy thereof, or mixed powder thereof.

4. The anode cell of claim 1, wherein the electrolytic material includes any one or two or more selected from potassium hydroxide, sodium chloride, potassium chloride, sodium hydroxide, calcium oxide, calcium carbonate, sodium carbonate, calcium hydroxide, barium hydroxide, or citric acid.

5. The anode cell of claim 1, wherein the water permeable body has a porous structure in which pores having a pore size of 0.01 to 100µm, preferably 0.05 to 50pm are formed; an average particle size of the powder of metal is 25 to 300µm, preferably 50 to 200µm, so that the powder does not leak from the water permeable body to the outside.

6. The anode cell of claim 1, wherein the electrolytic material further contains cerium hydroxide.

7. The anode of claim 1, wherein the electrolytic material further contains a hydrogen generation inhibitor.

8. A metal air fuel cell comprising the anode cell (103) of any one of claims 1 to 7 and a cathode (102).

9. The metal air fuel cell of claim 8, further comprising:
a water outlet formed at a lower end of the metal air fuel cell (101); and
a water inlet being in communication with the cathode (102) and the anode cell (103) and formed at an upper end of the metal air fuel cell (101).

10. The metal air fuel cell of claim 8, wherein the cathode (102) is manufactured to contain any one or two or more selected from a carbon material, a metal catalyst, or a conductor.

11. The metal air fuel cell of claim 10, wherein the cathode (102) includes a cathode current collector on which a cathode coating solution containing the carbon material, the metal catalyst, the conductor, and a binder is applied.

12. A method of manufacturing the anode cell (103) of any one of claims 1 to 7, comprising:
providing a water permeable body having a pouch shape, wherein the water permeable body is manufactured to contain any one or two or more selected from a polymer or a water absorption promoter, the polymer includes at least one of polyethylene, polypropylene and polyethylene terephthalate, and the water absorption promoter includes carbon molecular sieve; and
injecting a metal in a powder state and an electrolytic material into the water permeable body.

## Patentansprüche

1. Anodenzelle einer Metall-Luft-Brennstoffzelle (101), wobei die Anodenzelle (103) einen wasserdurchlässigen Körper mit einer Beutelform umfasst, in die ein Metall in Pulverform und ein elektrolytisches Material injiziert werden;
wobei der wasserdurchlässige Körper so hergestellt ist, dass er ein oder zwei oder mehrere ausgewählt aus einem Polymer oder einem Wasserabsorptionspromotor enthält;
das Polymer mindestens eines von Polyethylen, Polypropylen und Polyethylenterephthalat beinhaltet; und
der Wasserabsorptionspromotor ein Kohlenstoffmolekularsieb beinhaltet.

2. Die Anodenzelle nach Anspruch 1, wobei sich das elektrolytische Material in einem festen Zustand befindet und ein Elektrolyt in dem wasserdurchlässigen Körper durch Zufuhr von Wasser gebildet wird, so dass die Metall-Luftbrennstoffzelle (101) aktiviert wird.

3. Die Anodenzelle nach Anspruch 1, wobei das Metall ein beliebiges oder zwei oder mehrere, ausgewählt aus Lithium, Natrium, Kalium, Kalzium, Magnesium, Aluminium, Zink, einer Legierung davon oder Mischpulver davon, beinhaltet.

4. Die Anodenzelle nach Anspruch 1, wobei das Elektrolytmaterial ein beliebiges oder zwei oder mehrere ausgewählt aus Kaliumhydroxid, Natriumchlorid, Kaliumchlorid, Natriumhydroxid, Calciumoxid, Calciumcarbonat, Natriumcarbonat, Calciumhydroxid, Bariumhydroxid oder Zitronensäure beinhaltet.

5. Die Anodenzelle nach Anspruch 1, wobei der wasserdurchlässige Körper eine poröse Struktur aufweist, in der Poren mit einer Porengröße von 0,01 bis 100µm, vorzugsweise 0,05 bis 50µm, gebildet werden; eine durchschnittliche Partikelgröße des Metallpulvers beträgt 25 bis 300µm, vorzugsweise 50 bis 200µm, so dass das Pulver nicht aus dem wasserdurchlässigen Körper nach außen gelangt.

6. Die Anodenzelle nach Anspruch 1, wobei das Elektrolytmaterial weiterhin Cerhydroxid enthält.

7. Die Anode nach Anspruch 1, wobei das Elektrolytmaterial ferner einen Wasserstofferzeugungsinhibitor enthält.

8. Eine Metall-Luft-Brennstoffzelle, umfassend die Anodenzelle (103) nach einem der Ansprüche 1 bis 7 und eine Kathode (102).

9. Die Metall-Luft-Brennstoffzelle nach Anspruch 8, ferner umfassend:
einen Wasserauslass, der an einem unteren Ende der Metall-Luft-Brennstoffzelle (101) ausgebildet ist; und
einen Wassereinlass, der mit der Kathode (102) und der Anodenzelle (103) in Verbindung steht und an einem oberen Ende der Metall-Luft-Brennstoffzelle (101) ausgebildet ist.

10. Die Metall-Luft-Brennstoffzelle nach Anspruch 8, wobei die Kathode (102) so hergestellt ist, dass sie ein oder zwei oder mehrere enthält, die aus einem Kohlenstoffmaterial, einem Metallkatalysator oder einem Leiter ausgewählt sind.

11. Die Metall-Luft-Brennstoffzelle nach Anspruch 10, wobei die Kathode (102) einen Kathodenstromabnehmer beinhaltet, auf den eine Kathodenbeschichtungslösung aufgebracht ist, die das Kohlenstoffmaterial, den Metallkatalysator, den Leiter und ein Bindemittel enthält.

12. Verfahren zur Herstellung der Anodenzelle (103) nach einem der Ansprüche 1 bis 7, umfassend:
Bereitstellen eines wasserdurchlässigen Körpers mit einer Beutelform, wobei der wasserdurchlässige Körper so hergestellt ist, dass er ein oder zwei oder mehrere ausgewählt aus einem Polymer oder einem Wasserabsorptionspromotor enthält, das Polymer mindestens eines von Polyethylen, Polypropylen und Polyethylenterephthalat beinhaltet und der Wasserabsorptionspromotor ein Kohlenstoffmolekularsieb beinhaltet; und
Einspritzen eines Metalls in Pulverform und eines elektrolytischen Materials in den wasserdurchlässigen Körper.

## Revendications

1. Une cellule d'anode d'une pile à combustible métal-air (101), la cellule d'anode (103) comprenant un corps perméable à l'eau en forme de poche dans laquelle on injecte une poudre métallique et un matériau électrolytique ;
dans lequel le corps perméable à l'eau est fabriqué pour contenir un, deux ou plusieurs éléments choisis parmi un polymère ou un promoteur d'absorption d"eau ;
le polymère comprenant au moins l'un des suivants : polyéthylène, polypropylène, et du téréphtalate de polyéthylène ; et
le promoteur d'absorption d'eau comprend un tamis moléculaire de carbone.

2. La cellule anodique de la revendication 1, dans laquelle le matériau électrolytique est à l'état solide, et un électrolyte est formé dans le corps perméable à l'eau par apport d'eau, de sorte que la pile à combustible métal-air (101) est activée.

3. La cellule d'anode de la revendication 1, dans laquelle le métal comprend un ou deux ou plusieurs éléments choisis parmi le lithium, le sodium, le potassium, le calcium, le magnésium, l'aluminium, le zinc, ou un de leur alliage, ou une poudre mélangée à partir de ceux-ci.

4. La cellule anodique de la revendication 1, dans laquelle le matériau électrolytique comprend un ou deux ou plusieurs éléments choisis parmi l'hydroxyde de potassium, le chlorure de sodium, le chlorure de potassium, l'hydroxyde de sodium, l'oxyde de calcium, le carbonate de calcium, le carbonate de sodium, l'hydroxyde de calcium, l'hydroxyde de baryum ou l'acide citrique .

5. La cellule d'anode de la revendication 1, dans laquelle le corps perméable à l'eau présente une structure poreuse dans laquelle des pores ayant une dimension de 0.01 à 100µm de préférence 0.05 à 50µm sont formées; une dimension de particule moyenne de la poudre métallique étant de 25 à 300µm de préférence 50) 200µm de telle sorte que la poudre ne fuit pas du corps perméable à l'eau vers l'extérieur.

6. La cellule anodique de la revendication 1, dans laquelle le matériau électrolytique contient en outre de l'hydroxyde de cérium.

7. L'anode de la revendication 1, dans laquelle le matériau électrolytique contient en outre un inhibiteur de génération d'hydrogène.

8. Une pile à combustible métal-air comprenant la cellule anodique (103) de l'une quelconque des revendications 1 à 7 ainsi qu'une cathode (102).

9. La pile à combustible métal air de la revendication 8, comprenant en outre:
une sortie d'eau formée à une extrémité inférieure de la pile à combustible métal air (101) ; et
une entrée d'eau en communication avec la cathode (102) et la cellule d'anode (103) et formée à une extrémité supérieure de la pile à combustible métal air.

10. La pile à combustible métal air de la revendication 8, dans laquelle la cathode (102) est fabriquée pour contenir un ou deux ou plus choisis parmi un matériau de carbone, un catalyseur métallique ou un conducteur.

11. La pile à combustible à air métallique de la revendication 10, dans laquelle la cathode (102) comprend un collecteur de courant de cathode sur lequel on applique une solution de revêtement de cathode contenant le matériau de carbone, le catalyseur métallique, le conducteur et un liant.

12. Un procédé de fabrication de la cellule d'anode (103) de l'une quelconque des revendications 1 à 7, comprenant :
la fourniture d'un corps perméable à l'eau en forme de poche, dans lequel le corps perméable à l'eau est fabriqué pour contenir l'un quelconque des élément, ou deux éléments ou plusieurs éléments choisis parmi un polymère ou un promoteur d'absorption d'eau, le polymère comprenant au moins l'un des éléments suivants : polyéthylène, polypropylène, et du téréphtalate de polyéthylène ; et le promoteur d'absorption d'eau comprenant un tamis moléculaire de carbone ; et
l'injection d'une poudre métallique et un d'un matériau électrolytique au sein du corps perméable à l'eau.
